(19) Europäisches Patentamt
European Patent Office
Office européen des brevets

(11) EP 1 386 441 B1

(12) EUROPEAN PATENT SPECIFICATION

(45) Date of publication and mention of the grant of the patent:
**18.08.2004 Bulletin 2004/34**

(21) Application number: **02738994.9**

(22) Date of filing: **26.03.2002**

(51) Int Cl.$^7$: **H04L 7/033**

(86) International application number:
**PCT/RU2002/000120**

(87) International publication number:
**WO 2002/078228 (03.10.2002 Gazette 2002/40)**

# (54) RECEIVER WITH RECOVERY CIRCUIT USING OVERSAMPLING AND MAJORITY DECISION

EMPFÄNGER MIT EINER RÜCKGEWINNUNGSSCHALTUNG MITTELS ÜBERABTASTUNG UND MEHRHEITSENTSCHEIDUNG

RECEPTEUR A COMPENSATION D'OBLIQUITE AUTOMATIQUE

(84) Designated Contracting States:
**DE GB**

(30) Priority: **27.03.2001 GB 0107692**
**06.09.2001 US 317216 P**
**03.01.2002 GB 0131100**

(43) Date of publication of application:
**04.02.2004 Bulletin 2004/06**

(73) Proprietor: **Acuid Corporation (Guernsey) Limited**
**St. Peter Port, Guernsey GY1 4HP (GB)**

(72) Inventors:
- **ABROSIMOV, Igor Anatolievich**
**St.Petersburg, 190000 (RU)**
- **DEAS, Alexander, Roger**
**Edinburgh EH22 1ST (GB)**

(74) Representative: **Schröer, Gernot H., Dipl.-Phys.**
**Meissner, Bolte & Partner**
**Bankgasse 3**
**90402 Nürnberg (DE)**

(56) References cited:
**EP-A- 0 942 551**
**EP-A- 1 061 691**
**US-A- 5 140 620**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 386 441 B1

## Description

### Technical Field

The present invention relates to the communication of signals, in particular, to the transmission and reception of digital signals. More specifically, the present invention relates to both the static and dynamic compensation of skew in high speed communications channels or interfaces.

The present invention is particularly applicable to interfaces between integrated circuits and for high speed communications which require dynamic skew compensation.

### Background of the Invention

One common form of communication system involves digital signals representing data which is sent over wires or other communication media, called a communication channel. Since the distances between a transmitter and a receiver may be relatively large, the digital signal carried via the communication channel may pick up "glitches" or "noise".

At present, various factors are known to limit the maximum data rate of a digital receiver, among which are:

- timing uncertainty in the input signal;
- the phenomena known as metastability within the receiving registers, which is in modern CMOS systems in reality, phase noise internal to registers;
- the noise in the channel, including the phase noise of the clock synthesizer or recovery system;
- the required Bit Error level.

These problems have been addressed in the prior art by several approaches.

One approach has been to use a digital data receiver including an analog filtering section that conditions an input signal. The analog filtering section removes noise and unwanted frequency components from the signal. In a conventional digital receiver, the filtering circuit has a fixed bandwidth that is set to accommodate the anticipated baud rate of the incoming signal and to optimize the signal quality and the quality of the received data.

Signal quality is adversely affected by both intersymbol interference (ISI) and adjacent channel interference (ACI). Analog filtering circuits are commonly applied to reduce ISI, ACI, or other electronic noise associated with digital signal transmissions. ISI is reduced when the filter bandwidth is widened and ACI is reduced when the bandwidth is narrowed. Unfortunately, conventional fixed bandwidth filters inherently increase the amount of ISI when they are tuned to reduce ACI, and vice versa. As such, conventional analog filtering circuits in digital receivers are usually tuned to a less-than-optimum bandwidth with respect to ISI and ACI, which are often unknown a *priori.*

The bandwidth accuracy of conventional tunable analog filters is only about 10%. Although such accuracy may be sufficient to enable a digital receiver to gain symbol synchronization, the bandwidth inaccuracy may produce an unacceptable bit error rate (BER) resulting from excessive ISI or ACI. To minimize the BER in some applications, it may be necessary to maintain bandwidth accuracy to within 5% or less. Unfortunately, conventional fixed bandwidth filters are not responsive to fluctuations in BER, ISI, or ACI.

We will now consider in detail the effects of the different noise sources on the signal, when viewed over a short period of time, that is, without environmental changes. For clarity and ease of understanding, this field is described using elementary probability theory, which is a tool used widely in the engineering management of these problems. This theory is often taught pre-university, and expanded as a first year introductory topic for electronic engineering courses, and those versed in the field will be intimately familiar with this.

Data errors in a channel with Gaussian distributed phase and amplitude noise can be considered as a noiseless ideal channel and with noise assigned to a clock signal, which gives rise to the probability distribution of the sampling point as shown in Fig. 3. Symbols S0, S1 and S2 represent symbols on the input of the receiver, which samples the data at a point in time which is symmetrically distributed around the moment x according to Gaussian distribution and described by the formula:

$$\rho(t) = \frac{1}{\sqrt{\pi}} e^{\frac{(t-x)^2}{\sigma^2}}$$

So here we have a channel, with three subsequent symbols, S0, S1, and S2. In Figure 3, the distribution in time of the sampling point for S1 is shown, but in reality, each symbol has a similar curve, so we can consider the data

stream as a series of symbols, each of which is sampled by a series of distributions. This is shown clearly in Figure 5.

The Bit error rate (BER) can be calculated as a probability to sample wrong symbol and it is equal to probability to sample other than S1 channel symbol (dashed area in Figure 3) multiplied by the probability that symbol S1 has a different value, which for binary coding with equally distributed zeros and ones is equal to 0.5. This can be described by the formula:

$$BER(x) = \frac{1}{2\sqrt{\pi}}\left(\int_{-\infty}^{0} e^{-\frac{(t-x)^2}{\sigma^2}}dt + \int_{1}^{\infty} e^{-\frac{(t-x)^2}{\sigma^2}}dt\right) = \frac{1}{4}\left[erfc\left(\frac{x}{\sigma}\right) + erfc\left(\frac{1-x}{\sigma}\right)\right]$$

For the distribution shown in Fig.3, the BER function is shown in Fig. 4.

The BER curve has a minimum in the middle of bit interval, as shown in Figure 4 for one symbol. For a series of symbols, this BER curve becomes a periodic function with a period equal to one bit interval. This is shown in Fig.5.

The value at the minimums depends on the distribution width σ. A graph of resulting function is shown in Fig. 6.

The signal to noise ratio can be calculated in dB, for bit width w and RMS jitter according to the formula:

$$SNR = 20\lg\left(\frac{w}{2\sigma}\right)$$

For a single flip-flop, the probability to capture a logic state (either from a 0 to a 1, or a 1 to a 0) is a function of the time difference between the sampling point and the point where input signal crosses the threshold. This function can be approximated as following:

$$P(x) = \frac{1 + Erf(x\sigma)}{2}$$

P(x) is a probability to capture the correct logic state,

x is a time difference between the moment when the input signal crosses the threshold and the sampling point,

σ is the RMS value of noise in a system, that is the congregate of noise in channel, driver and receiver.

Fig.7 is a diagram showing a plot of this probability function taken from an interface implemented using SSTL16857 registers as the solid line, and the theoretical function as the dotted line. In this case, the value of σ is 21 pico seconds, from observation of the measured signal with its noise. This distribution is $P(x) = 1 - P(-x)$.

In addition to the noise distribution of the signal, we must consider the effect of environmental changes, which cannot be considered by the same BER analysis, because the time period needed to consider the environment is of many orders of magnitude longer than the time period involved in the consideration of phase and channel noise.

In a communication channel, the integrity of the received data can be observed using an eye diagram, such as in Fig. 2. The eye in the very centre is the region where the data is stable and is strobed. The eye diagram shows time in the X domain, in picoseconds in Fig. 2, and voltage or current in the Y domain, in mV in Fig.2. To receive data securely, it is necessary to sample the data (that is, close a gate in the time domain), with the switching threshold of the gate as close as possible to the centre of the eye. A technique for tracking the centre of the eye in the voltage or current domain is described in US patent application 60/315,907. The present invention relates to how the eye is tracked in the time domain.

The problem addressed by this innovation arises in very high speed systems, where each signal can move in time due to changes in the environment, in addition to movement due to channel noise, as has been already considered. For example, if a signal switches at 10GHz, then the effect of someone putting their hand close to the signal track may cause the signal to move in time by more than a clock period, similarly if the signal is travelling down a cable and the cable is bent then the signal will take more or less time to arrive. Low frequency noise, vibration, temperature drift, loading, power supply voltage changes, and other sources, all have the effect of skewing the signal. This means that the static picture represented by the eye diagram is not representative of the dynamic environment. The environmental change can be considered as a long term shift of the entire probability distribution of the channel, that is the shift of the series of distributions shown in Fig. 5. As this distribution shifts, if the sampling point is fixed in absolute

time then the errors increase: the signal is no longer sampled at the minima of the BER curves, so the bit errors increase as a function of the shift. Even small shifts can completely destroy the ability of the channel to communicate any data at its maximum data rate.

Several techniques are known in the art to track and optimize the data sample position.

These include integrating the eye pattern transitions over a longer period of time. Some clock sampling schemes use only an initial transition reference to prevent tracking the clock sample position into a less advantageous portion of the eye pattern.

Generating several signal samples over time (over-sampling) and combining the samples in a majority decision logic to determine the most likely outcome is well-known and used, for example, in US 4,771,421, US 4,241,311, US 4,965,884, US 5,018,142 and EP 0797,326, EP 0575,000.

Thus, US 4,771,421 describes a system comprising sampling means having inputs connected to the outputs of shift registers for giving an indication of a particular binary value when more than a predetermined number of outputs of shift registers show an one-bit value. No BER distribution is taken into consideration.

US 4,241,311 describes a system comprising means for sampling a signal at the times of clock signal, and apply the stream of sampled signal bits to a digital shift register and on to majority gates. No selection of the best copy is disclosed.

In US 4,965,884, a system is described comprising sampling means and means for choosing a data sample representing a majority of the data samples.

US 5,018,142 describes a system comprising a sampler for sampling incoming signals and employing majority circuits to change the value of any samples that are not part of a plurality of sequential samples of the same value.

US 6,127,864 describes a system that samples data at three different times and also outputs a majority signal at the forth time. No BER estimation is made.

EP 0575,000 describes a system having a majority logic arrangement for estimating data from a noisy data signal, which monitors the data samples entering and leaving a shift register and a transition between "1" state and "0" state.

EP 0797,326 describes a method comprising the steps of receiving a signal, sampling the signal at a predetermined sampling rate, generating a second and third samples by shifting the first sample, whereupon the samples are compared to one another and a majority sample value is obtained which represents the corrected signal value.

Though the above described approaches involves over-sampling of several signals, no BER distribution function of a signal is taken into consideration in none of the above described technique. Also, it shall be well understood that in highspeed communications, it is absolutely not evident that the majority signal would have a better quality than separate signals combined by majority. Due to the higher data rate required in high speed communications, the channel bandwidth is occupied mostly by data that makes it impossible to rely upon majority decisions without the precise estimation of the sampling position with respect to eye window.

According to another approach, the Bit Error Rate is measured for a signal decided as having the least BER by majority and compared with each of the repeatedly received patterns.

In EP 0193,332 an apparatus for processing a digital signal is described wherein a particular signal pattern with the least error rate is determined by majority logic. The signal pattern is transmitted repeatedly, and processed in a receiver by measuring the Bit Error Rate in a transmission path with the majority signal pattern equivalently used as a reference. Thus, the signal copies are produced by a transmitter, not by a sampling system, therefore the copies may differ in frequency, noise characteristics, etc.

In EP 1 061 691, a digital PLL circuit comprises a sampling circuit for sampling received burst-mode data using polyphase clock signals. The head of the pattern of bits is detected using an identification pattern, and thereon, bits are sampled by tracking the eye of the eye window and assuming that each bit is sampled in the centre points of its respective bit window, for a row of consecutive bits. To this end, multiple clocks are selected so that to have the highest possibility for coming to the centre point of each bit. However, the estimation of BER that is done in EP 1 061 691 actually relates to a pattern of bits in whole, and not to determining BER for each signal copy. Moreover, no selection of the sampling point is done based on BER determination.

According to approach in US 5,140,620, the optimum sampling point is determined by statistical means as that which yields the minimum of "bit error rate" (BER), which indicates the average number of incorrectly received bits per received data bit. The nominal sampling point (register output) is determined from the clock run-in, and a bit error rate for a number of lines of data is determined using the nominal sampling point. Thereafter, the sampling point (selected register output) is incremented in a first direction, until there is no improvement in the bit error rate. If this does not result in an improved bit error rate, the sampling point is incremented in the opposite direction until no improvement is obtained. If there is no improvement in either direction, the nominal sampling point is the optimum. Though this method is based on BER determination, the local extremums are obtained only, in the absence of the full BER distribution across the data channel, that prevents from receiving the full picture and therefore, if the minimum of the BER distribution is moving, the data will be sampled at incorrect position.

In US 4,891,812, a method is described comprising the steps of generating a majority signal from at least three signals, determining the BER for each signal by bit-by-bit comparison with the majority signal, and selecting either one of the signals or the majority signal. Again, the signals are coming via separate channels and produced by a transmitter, not by a sampling system, thus, the system does not improve the quality of the signal received, but chooses a signal of better quality among several signals. The BER is estimated between different channels with respect to majority signal and does not reflect the BER distribution within a separate channel as a function of phase of the sampling clock.

According to US 4,432,094, a method comprises sampling the signal at different times and deciding by majority the signal with the lowest information error rate. However, the samples are taken at multiple of the information clock frequency that does not allow to use this technique in the high speed interfaces because it is impossible to generate multiple frequencies when the information clock frequency is already near the maximum achievable in this particular technology.

According to the above described and other patents, such as US 6,111,911, a high degree of chip code synchronization is used to clock the data bit position. Transmitters transmit a data bit in synchronization with the chip code pattern, therefore allowing chip position to be used as a cue to the associated data bit position. Since the optimal position in which to sample a data bit is known, that portion of the Bit Error Rate loss is eliminated. Empirical results from this technique have shown practical improvements in the error rate versus carrier-to-noise ratio in the minimal detectable signal case. This technique is applicable to any direct sequence spread spectrum system in which a high degree of synchronization is inherently achieved, provided that the data is transmitted in synchronization with the chip code clock.

However, very often, in particular, in high speed communications, such a synchronisation is not effective, while the Bit Error rate is defined by the current application system requirements. The more strict are these requirements, the lower is the data rate providing the desired Bit Error level. A special case of this applies to where a communication channel uses clock recovery, that is, the clock is recovered from the signal, as in US 4,891,812 discussed above, and this is used to latch the received data. This approach does, to a limited degree, reduce the effect of low frequency noise, such as environmental changes. However the problem with this approach is that the entire error in the clock recovery system or the phase detectors is added to the noise in the channel and for very high frequency applications, this inaccuracy becomes a significant problem.

<u>Object of the present invention.</u>

It is therefore a primary object of the present invention to provide an improved system for the communication of digital data in a noisy channel.

It is another primary object of the present invention to compensate statically and dynamically for the skew caused by the channel noise, production tolerances and variations in channel length.

It is another object of the invention to provide an improved, economical apparatus for transmitting and receiving data at high bit rates required for chip-to chip and high speed digital communications.

It is yet another object of the invention to provide an improved, highly accurate and reliable reading of data at high speeds suitable for the processing of digital signals in communication systems.

It is a further object of the invention to provide an improved and highly compact receiving circuit with low timing uncertainty that can be economically implemented in a semiconductor integrated circuit.

It is another object of the invention to provide an output interface for a digital receiver that provides the data flow through the receiver with a transmission rate of the signal at a low bit error level.

It is a further object of the current invention that the channel reduces the production tolerances needed for its implementation by virtue of the system adapting to the environment in which it operates.

It is a further object of the current invention to reduce the timing errors in the clock recovery process in a serial communication link.

These and other objects of the present invention are attained by a receiver employing a plurality of samplers coupled to a plurality of comparators, whereby the characteristics of the channel are used to compensate for skew within the channel by altering the timing characteristics of the signal.

By comparator, we mean a logic function which produces an output proportional to the similarity of one input to other inputs, or its complement. The comparators under consideration here produce the value of the number of the inputs which mismatch with those that are in the state of the majority. The very simplest comparator is a two input XOR (Exclusive OR) function, and for a three input element, the logic function (E) is shown in Fig.11.

A particular form of the invention is suitable for transmitting digital data at Rapid IO® , 3GIO, Infiniband® , Gigabit Ethernet and other high speed communications standards.

Summary of The Invention

The present invention relates to a device and method employing the switching characteristics within the receiving registers to determine the characteristics of the channel and to compensate for skew within the channel by altering the timing characteristics of the signal. The present invention involves various applications of the same innovation: the reduction of timing error by combining a plurality of registers to produce a composite register with a reduced level of internal noise.

In its most basic form, the invention applies a plurality of registers in such a way that their probability distributions are combined, such that the overall distribution is narrower than the distribution of any one of the registers acting alone. A register in this context is generally, but not necessarily, a data sampler, and may have only transitive register characteristics such as a dynamic flip flop or storage gate.

The invention comprises a series of registers which sample the data, each register slightly offset in time, for example, with a variable delay between registers, such as in Fig. 8, or static delays as in Fig. 9. In the very simplest embodiment, there need be no distinct delay element, because when a set of registers is triggered at the same instant in time, their internal phase noise will cause them to latch at different points in time, as a function of the distribution which is shown in Fig. 3.

In a more refined embodiment, the present invention spaces the plurality of registers in time using delay elements, or wire with inherent delay, and then applies the outputs of these registers to a logic network to determine which register have the lowest bit error rate. This set of delay elements can be implemented using a polyphase clock generator to equalise the space between registers.

Thus, in one aspect of the invention, a receiver is provided, comprising a plurality of samplers for sampling data, coupled with a set of delay devices for providing a series of signal copies with each copy being shifted by a predetermined time interval, at least one means for comparing signals latched by said samplers, a means, such as multiplexer, for choosing a signal copy with minimal BER, and a means, such as state machine, for determining the number of the signal copy with minimal BER, and optionally, a pipeline for latency adjustment.

In another aspect of the invention, a receiver comprises a plurality of samplers for sampling data, providing a series of simultaneous signal copies, at least one means for comparing signals latched by said samplers, a means for choosing a signal copy with minimal BER, a means for determining the number of the signal copy with minimal BER, and optionally, a pipeline for latency adjustment.

In still one more aspect of the invention, a receiver comprises at least one sampler for sampling data coupled with a set of delays, or a variable delay, providing a series of spaced in time signal copies, at least one means for comparing signal copies, a means for selecting a signal copy with minimal BER, a means for determining the delay corresponding to this copy, and a means for applying the obtained delay to other samplers when sampling data.

The proposed receiver provides the high speed transmission of data, wherein the data transmitted are latched at the moment when the signal has the maximal stability.

Preferably, the samplers are implemented as registers, flip-flops, latches, track-and-hold, sample-hold devices, etc.

Preferably, comparators are implemented as XORs as in Fig. 10, or as majority elements, or such using circuitry such as shown in Figure 11 to create an error output (E) which is the number of bits which differ from the majority of the input bits, shown in Figure 11 for three inputs.

In another aspect, a method of high speed communication is provided employing the characteristic of metastability, that is phase noise internal to the register, within the receiving registers to measure the characteristics of the channel and to compensate for production tolerances within the channel by altering the timing characteristics of the signal.

In still another aspect, a communication channel employing a receiver of the present invention is provided.

Brief Description of The Drawings

For a better understanding of the present invention and the advantages thereof and to show how the same may be carried into effect, reference will now be made, by way of example, without loss of generality to the accompanying drawings in which:

Fig.1 shows a block diagram of an extended embodiment of the present invention to form a receiver;

Fig. 2 shows an eye diagram for a channel running at 12.5Gbps with an eye opening amplitude of 20mV and 55ps.

Fig.3 shows the sampling point distribution for a bit S1 in a serial data stream.

Fig. 4 shows a Bit Error Rate Distribution in accord with position in time inside the bit frame of the actual sample point.

Fig. 5 shows the series of Bit Error Rate Distributions for a serial data stream.

Fig.6 shows the level of the Bit Error Rate where the sampling point is on the minima of the Bit Error Rate Distribution, as a function of the ratio of bit interval to RMS channel noise.

Fig. 7 is the theoretical (dotted) and experimental (solid) probability to capture a logic state moving from 0 to 1 as a function of the time difference between the sampling point and the point where input signal crosses the threshold, in the case where the sampler was implemented using a SSTL16857 register.

Fig. 8 shows a block diagram of an embodiment of the present invention using variable delays between the samplers.

Fig. 9 shows a diagram of sampler 2 shown in the Block Diagram in Fig. 1.

Fig. 10 shows a transition detector according to one of the example embodiments of the invention.

Fig. 11 shows a three input logic block to create an error output (E) which is the number of bits which differ from the majority of the input bits, and Q, which is the majority element output, E being the orthogonal function of Q.

Fig. 12 shows the family of functions of the Bit Error Rate Distribution for a series of bits, on the output of the majority element, for different widths of the majority element, where all noise is external to the sampler.

Fig. 13 shows the family of functions of the Bit Error Rate Distribution for a series of bits, on the output of the majority element, for different widths of the majority element, where all noise is internal to the sampler. The importance of this can be understood more clearly from Fig. 14, which shows the same curves with a linear scale, rather than a log scale and with a scaling.

Fig. 15 shows the BER against the number of samplers per bit, equally distributed across the bit interval, as a function of the ratio of the bit interval to the RMS noise.

Fig. 16 shows the family of curves for probability of the output transition sensor output being a 1 where 16 clock phases are used to control the time interval between samplers. Each curve in this figure is for a particular ratio of bit interval to RMS noise.

Fig. 17 shows the effective baud rate for a channel according to the current invention as a function of the size of the packet (for each curve, the packet size is in bits), for an example channel with 10ps RMS noise.

Fig. 18 shows the same information as Fig. 17, but with 64 bits of protocol overhead deducted from each packet, to give a family of curves showing actual data rates excluding the protocol, under the same conditions of 10ps RMS noise.

## Detailed Description Of The Invention

The invention will now be described in detail without limitation to the generality of the present invention with the aid of example embodiments and accompanying drawings.

The very simplest embodiment of the present invention comprises several samplers used in parallel with majority logic at the output. This will have the effect of combining the BER probability distribution, such that if the samplers are of a similar type, then the resulting BER distribution is narrower than for any of the individual samplers. The sampler in this instance would normally be a flip flop, a simple type of register. The logic to combine these registers is shown in Fig. 11 for three flip flops. The advantage of increasing the number of flip flops required is illustrated later in a more sophisticated embodiment, but the same principle applies for all embodiments of the present invention.

A second embodiment of the present invention uses the same principle to implement a single bit self-calibrating receiver as provided in Fig. 8, with 3 monotonic delay verniers 61, 62 and 63, a transition detector 66, two samplers with pipeline adjusters 67 and 68, controller 69 and output multiplexer 70.

The controller in this case can be a comparatively simple state machine which continuously scans the vernier at the input of the transition detector and measures and stores values corresponding to the minimums of that function. The preferable range of these verniers should be not less than two channel symbol intervals to allow more than one local minimum. Scanning need only be provided at a low frequency, such as 20KHz, allowing easy filtering of the received data from the transition detector signal.

At the end of each cycle of scanning the vernier at the input of transition detector, the co-ordinate of the value closest to the middle minimum is loaded into one of verniers at the input of sampler. Both samplers work consecutively. When scanning is finished and a new value of the position of minimum is determined, the spare vernier is placed onto the corresponding position and then output multiplexer switches to that channel. If the new position of the minimum belongs to the different bit an appropriate pipeline adjustment must be provided. Depth of the pipeline adjusters should be enough to cover all possible skew values. The initial position after power up or reset should be in the middle.

Continuous monitoring of the input allows timing uncertainty to be compensated at the input, including due to drift or low frequency noise due to environmental variations.

The sampler can be implemented in a different ways. The simplest is a single flip-flop, but to increase performance or reduce the Bit Error Rate, several flip-flops can be used in parallel with majority logic at the output which will be equal to one if more than half of the inputs are equal to one. An odd number of flip-flops shall be used with a total quantity 2n+1. The resulting Bit Error Function is described as:

$$BER_n(x) = \sum_{k=n+1}^{2n+1} C_{2n+1}{}^{k} \times \left[P^k(x) \times (1-P(x))^{2n+1-k}\right]$$

Plots of the different resulting Bit Error functions are provided in Figures 13 and 14. The choice of the number of samplers is determined from the BER curves, in particular a plot such as shown in Figure 15, where BER is plotted against the number of samplers, for various amounts of noise: each curve in Fig.15 is for a particular ratio of bit interval to RMS noise. This shows that 16 samplers is sufficient to operate with a bit interval to RMS noise ratio of 8, such as a channel with 10ps RMS jitter with a 80ps bit interval. Reducing this value, will according to the curves in Fig. 15 to less than 16 samplers, will increase the bit error rate of the channel.

To enable the raw Bit Error Rate from the channel implemented according to the present invention, to be used effectively without data errors, error correcting codes such as Viterbi or blocking codes should be used, with either error correction or retransmission of the data in the event of a bit error. The channel payload curves, such as shown in Figures 17 and 18, are used to determine the useful data capacity of the channel incorporating these error detection or correction techniques.

A plurality of units described can be used for implementing a wide parallel bus. In this case after power up an extra procedure is used for correcting the depth of Pipeline adjusters on the different bits to achieve the same latency. There are many ways to align bits, such as described in standard protocols like Infiniband. A simple solution is to use an zeroes to all ones pattern, but for complex skew adjustment such as the pattern dependent adjustment described in other patents by the same inventors, the gating function of the present invention may be used to select individual bits in a data stream.

For better stability, coding is preferably used to limit the space between changes of state or toggles. An appropriate means to do this is using 8b/10b encoding, which is widely used in the industry to achieve a DC balanced code, with a limited frequency bandwidth by enforcing changes in data polarity using encoding techniques.

In Fig. 1, a block diagram of an third and improved embodiment of a receiver according to the invention is shown. Preferably, the receiver comprises samplers 2, majority elements and transition detectors 3, 4, 5, data selector 6, controller 7 and a pipeline latency adjustment elements 8 which operates as a FI FO.

Preferably, samplers 2 are implemented as a set of registers for latching data illustrated in more detail in Fig. 9. As shown in Fig.9, registers 31, 32, 33, 34 are coupled with a set of delay devices 35, 36, 37 for providing a series of signal copies with each copy being shifted by a predetermined time interval. These registers provides a signal at different points of time, according to the continuous BER function shown in Fig. 5.

Samplers can be also implemented in other ways. The simplest is a single flip-flop but to increase performance or reduce the Bit Error Rate, several flip-flops may be used in parallel with majority logic at the output according to the most basic embodiment of the current invention. That is, the invention can be applied in a nested manner.

The outputs of samplers 2 are connected to the inputs of majority elements 3,4,5, where the output of each of the majority element is equal to "1" if more than half of the inputs are equal to "1", and "0" if more than half of the inputs are equal to "0". An odd number of samplers shall be used in conjunction with each majority elements with a total quantity 2n+1.

A receiver as shown in Fig. 1 according to the present invention comprises a set of logic elements 3, 4, 5, for providing a value Q corresponding to the value at the majority of its inputs (D0, D1, D2) and a number E of inputs having value different from the value at the majority of inputs.

A detailed example of these logic elements for k=3 is shown in Fig. 11, and it is a simple matter to expand this to cover any number of inputs using the majority function. The techniques for expanding logic functions are widely disseminated. For even number of inputs the function is simply an XOR. The logic function is that when all inputs are zero or all inputs are one, the output is zero. When only one 1 input is zero or only 1 input is one, then the output is 1. When only two inputs are one or only two inputs are zero and the number of inputs is more than 3, then the output is 2, and so on. This logic can be synthesized by standard tools, such as those from Synopsis and other EDA vendors, or can be derived by hand without difficulty.

The logic element in Fig.11 consists of three AND elements 41, 42, 43 coupled to an OR element 47 which gives a value Q corresponding to the value at the majority of inputs of AND elements 41, 42, 43, and NAND element 44 and OR element 45 coupled to AND element 46 which gives the amount E of AND elements having input value different from the value at the majority of inputs.

The receiver in Fig. 1 further comprises a data selector or multiplexer 6 for choosing a copy of the signal with minimal BER, a state machine 7 for determining a number of the copy with minimal BER, and a pipeline 8 for latency adjustment.

According to the invention, for a better performance of the communication channel, the bit interval is covered by several samplers spaced in time, wherein the sampler that is closest to the minimum in BER function is preferably

chosen as the sampler used for data receiving.

A particularly useful method of spreading samplers in time is to use a polyphase clock. Clock trees can generate a polyphase clock by virtue of their delay, or the clock can be implemented using a ring oscillator with each clock phase being taking from each inverter stage of the oscillator. Some extra phase splitters can be used for finer granularity. With the polyphase clock, the sampling point of each of the registers is spread in time by virtue that they are clocked at slightly different instances in time.

Another useful aspect-of the present invention, is that the outputs from the samplers themselves indicate over a number of cycles, the DC bias in the signal. This information can be applied using the invention described in US patent application 60/315,907 to track the voltage or current threshold within the eye diagram.

The application of the sampler outputs to achieve this purpose should be apparent to someone skilled in the art of signal processing, but in summary, when the bit stream is encoded with a DC balanced code such as phase modulated codes, 8b/10b encoding, or 16b/20b encoding, then the value of each of the samplers should be 50 percent 1 s and 50 percent 0s. If the average amount of 1 s is more than 50% then the threshold should be increased such as by lowering the terminating voltage or controlling the reference in a differential stage. If the average number of 1 s is less than 50%, then the threshold is too high, and the reference voltage should be lowered. Similar compensation can be implemented with current mode systems. Just using one register and averaging over a number of cycles gives a loop response which can be longer than the period of the noise, particularly in real systems where the noise can be caused by other logic, such as power supply noise - in modern low voltage DC to DC converters these are already operating at frequencies of around 10MHz, so rapid adjustment of the threshold is needed. The present invention gives the input data from each single clock to perform this adjustment: if the samplers are spread in time, then their outputs will be distributed by a function that be approximated to be the integral of a Gaussian function for each data transition, that is a symmetrical function around the threshold, such as the 0.5 level in Fig. 7. Any tendency for the threshold in the eye diagram to move, is seen immediately by the imbalance in the distribution of these samples, allowing the eye of the eye diagram to be tracked in the Y domain on a cycle by cycle basis, in parallel with the normal operation of the channel.

Operation

The operation of the present invention in its most basic form can be easily understood by a specialist in the art, and can be aided using tools such as MathCAD® . The operation of the more complicated embodiments can be understood by considering the function of the receiver shown in Fig. 1. The operation of this receiver will now be described, without loss of generality.

To identify the position in time at which BER function is minimal, several approaches can be used. By spreading the samplers in time, information on which direction the signal is moving in time can be determined, and this information can be used by the controller to introduce pipeline delays and to track the eye of the eye diagram over multiple clock cycles. It is not essential to have these samplers spread in time by more than one bit period, or even a bit period.

If the sampler with the lowest bit error rate moves to the upper boundary, then it shall wrap to the first sampler to continue to move to the sampler with the minimum bit error rate, then it is required to capture two bits in one cycle: on from the first sampler, and one from the last sampler, and take data from the first sampler in the subsequent clock cycles.

If the sampler with the minimum bit error rate moves to the lower boundary, the opposite is performed, with one sample being dropped by jumping from the first sampler to the last sample on two sequential clock cycles.

However, if the time delay between the samplers is not well defined, then extra samplers can be added to provide an overlap between subsequent bit intervals.

One approach according to the invention is to use several samplers per input line with a difference in delays from the input to the sampler. These delay elements can be implemented in a data path, in a clock signal path, or in both paths

According to the example embodiment shown in Fig. 9, each flip-flop 31, 32, 33, 34 takes independent samples of their input in different moments of time covering an interval wider than one bit symbol interval.

Each flip-flop can be defined by a function $P(x + x_n)$, as shown in Figure 3 where $x_n$ is a difference in sampling points between the first sampler and sampler n as:

$$x_n = x_0 + \sum_{i=1}^{n} \Delta x_i$$

Each k subsequent inputs are passed to logic element 3, 4, 5. The E output of each logic element is passed

to a state machine 7 which determines the logic element with minimal error level. The number of this element is passed to output multiplexer 6, which passes data signal Q from that element to the output. The state machine 7 counts 1 s from each of the logic elements, 3, 4, 5 etc, in a certain period of time. It then compares the counts to find the channel which generates the lowest number. This channel number is coded and passed to the data selector 6, so data is selected from that sampler and passed to the output pipeline adjuster, used as a FIFO 8. This FIFO can, in a preferred embodiment, pick up none, one or two symbols in a cycle, to allow the samplers to be wrapped as already explained for when the sampler with the lowest BER is moved across the bit frame boundaries.

The state machine 7 also functions to adjust pipeline depth at the output of the receiver when new selected majority element is one bit interval away from the previously used element. Thereby, continuous monitoring of the state machine inputs provides compensating timing uncertainty at the receiver's input and its drift or low frequency noise due to environmental variations.

A single bit channel of the receiver according to the invention with k = 3 is shown in Fig.5. A plurality of receivers can be used for parallel busses. In this case initial pipeline values shall be updated during initialization procedure to provide the same latency on each bit.

Congregate sampler noise may be considered as independent for all samplers. A fraction of this noise, which is caused by the sampler itself, is independent from each other while noise created by clock generator, signal transmitter and channel media are applied to all samplers simultaneously.

To analyze the technical effect achieved by using majority elements, both utmost alternatives when the fraction of the sampler noise is 100% and 0% shall be considered.

When the sampler inherent noise is 100%, the BER value at the output of majority element depends significantly on the number of samplers used for that element as shown in Fig.6 for k=1,3,5. In this figure, the upper curve is obtained using one sampler per each majority element, the middle curve, using 3 samplers per majority element, and the lower one, using 5 samplers.

When the sampler inherent noise is negligible, the number of samplers used for majority function does not make any significant changes in resulting BER as seen in Fig.7.

Averaged and normalized E output of majority element also does not significantly depend on the number of majority element inputs as shown in Fig. 8.

From the expectation that the largest portion of noise belongs to driver, channel media and clock generator, it is clear that it is preferable to use minimum number of inputs at majority elements which is 3.

The resulting BER value is different for different number of samplers equally distributed across bit interval and for different ratio between bit interval and RMS noise value. These functions are presented in Fig.9, where the number of samplers is on horizontal axis and the ratio between bit interval and σ is an index of BER function. It is clear from this picture that the optimal number of samplers per bit is close to 16.

A simplified alternative arrangement is shown in Fig. 8. According to this embodiment, a single bit receiver contains three monotonic delay verniers 61, 62, 63, transition 66, two samplers 64, 65 with pipeline adjusters 67, 68, controller 69 and output multiplexer 70.

The feedback loop or detector 66 is used to control the best sampling point position. For example this detector can be implemented as shown in Fig.11. Two independent flip-flops 11, 12 are sampling of their inputs simultaneously. Each flip-flop is defined by the P(x) function described above.

The state machine 69 continuously scans the vernier 63 at the input of the transition detector 66 and measures and keeps values corresponding to the minimums of that function. The preferable range of these verniers should be not less than two channel symbol intervals to allow have more than one local minimum. Scanning need only be provided at a low frequency, such as 20KHz, allowing easy filtering of the received data from the transition detector signal. At the end of each cycle of scanning the vernier at the input of transition detector, the co-ordinate of the value closest to the middle minimum is loaded into one of verniers at the input of sampler. Both samplers 64, 65 work consecutively. When scanning is finished and a new value of the position of minimum is determined, the spare vernier is placed onto the corresponding position and then output muxer 70 switches to that channel. If the new position of the minimum belongs to the different bit, an appropriate pipeline adjustment must be provided. Depth of the pipeline adjusters 67, 68 should be enough to cover all possible skew values. The initial position after power up or reset should be in the middle.

Continuous monitoring of the input allows timing uncertainty to be compensated at the input, including uncertainty due to drift or low frequency noise due to environmental variations.

Thus, the present invention provides improvements to the Bit Error rate versus channel and inherent register noise. This improvement is a result of intelligent arrangement of circuit elements and employment of the characteristic of metastability, (by which we mean the probability distribution of the transition phase noise internal to a register), within the receiving registers to measure the characteristics of the channel and to compensate for production tolerances within the channel by altering the timing characteristics of the signal.

The advantage of the present invention is that the data bit is sampled at the optimal position and, thereby, it

is possible, for a given Bit Error rate, to provide a system having a minimal bit interval, in which the data rate may be increased up to few σ per bit, such as 4 σ, where σ is RMS value of noise in a system which is congregate noise in channel, driver and receiver.

In another embodiment, the samplers and their associated logic can be pipelined, such as in FIFOs or by a datapath.

At its most basic level, the present invention samples the data and then subsequently, the logic determines what was the best time to have sampled that data, with full hindsight. This is a fundamental aspect of the sophisticated embodiments of the present invention. This is quite contrary to contemporary methods, which require the connection of some extra detectors on the channel, or supplement receivers with sensors that try to compensate for the future changes in the channel as a function of past data. In the present invention we sample the data first and compensate later.

Another advantage of this invention is that the correction of the threshold is determined using the same samplers as for sampling the actual data, not a copy of those samplers. This means the correction that is applied can be as exact as required.

All of the compensation that is described herein is preferably implemented using exclusively digital circuitry, even the threshold adjustment which can be a charge pump.

Empirical results from the application of the present invention have shown large practical improvements in the error rate versus the congregate noise and considerably reduces timing uncertainty.

In some logic families, a metastable state may cause oscillation of the register. Metastability is considered mathematically to be an asymptotic point in time, which as it is approached, the output of the register takes exponentially longer amounts of time to settle into a known state. This is true of phase noise
where the outputs of the register are considered in aggregate over many samples. Another phenomenon can exist in logic families where the wire delays within the register are short in comparison to the gate switching speed, in which case a positive feedback state can exist. In this circumstance, as the metastable point is approached, the register can oscillate. This can be corrected by better layout, such that the registers used here exhibit a point of maximum phase noise at their mean transition point and do not go into self sustaining oscillation.

**Claims**

**1.** A receiver for high speed data interconnect, comprising

- a sampling system for receiving a digital signal, comprising a plurality of samplers (67, 69) for providing a series of signal copies of the received signal,
- a clock generator for generating clocks for spreading the samples in time so that each bit interval is covered by several samples,
- a transition detector for detecting the point in time where the input signal crosses the threshold;
- a controller (69) or controlling the samplers, the controller tracking the eye of the eye diagram of the received signal using data obtained by the transition detector;

**characterised in that** the sampler producing a signal having the lowest Bit Error Rate is selected based on BER distribution determined using BER values for different samplers, to define the sampler which is closest to the minimum in said BER distribution as the sampler used for data receiving.

**2.** A receiver according to claim 1, wherein the sampling system comprises at least one sampler coupled to a set of delays or a variable delay, for providing a series of spaced in time signal copies.

**3.** A receiver according to claim 1, wherein the sampling system comprises a plurality of samplers and a polyphase clock generator for generating multiple clock phases, for providing a series of spaced in time signal copies.

**4.** A receiver according to claim 1, wherein the sampling system comprises a plurality of samplers coupled to a set of delays, for providing a plurality of spaced in time signal copies.

**5.** A receiver according to any one of claims 1 to 4, further comprising a logic network that compares the values of bit errors relative to each signal copy to select the signal copy with the minimum Bit Error Rate.

**6.** A receiver according to any one of claims 1 - 5, wherein the signal copies are spaced in time uniformly.

**7.** A receiver according to any one of claims 1 to 6, wherein the BER function is determined against RMS channel noise.

**8.** A receiver according to any one of claims 1 to 7, wherein the continuous BER distribution is defined over multiple clock cycles in a series data stream.

**9.** A receiver according to claim 5, further comprising a means to determine the bit errors against the delay, a means to determine the delay corresponding to a copy with minimal bit error; and a means to apply the delay determined thereby to other samplers.

**10.** A receiver according to any one of claims 1 to 9, wherein the BER function is determined against the ratio of bit interval to RMS channel noise, to determine the required number of samplers depending on the amount of channel noise.

**11.** A method of high speed data interconnect, comprising:

- providing at least one sampter (64, 65) for sampling data, coupled with a set of delays or a variable delay (61, 62),
- generating clocks for clocking the sampler or samplers at predetermined time intervals to provide a series of spaced in time signal copies covering at least one bit interval,
- tracking the eye of the eye diagram of the sampled signal;

**characterised in that** the method further comprises
selecting the sampler producing the signal having the lowest Bit Error Rate based on the BER distribution determined using BER values for different samplers, to define the sampler which is closest to the minimum in said BER distribution.

**12.** A method according to claim 11, wherein a plurality of samplers is clocked by multiple clock phases generated by a polyphase clock.

**13.** A method according to claim 11 or 12, wherein the data are sampled first and then, subsequently, the best time to have sampled that data is determined as the point where the BER function has its minimum.

**14.** A method according to claim 11, wherein the spaced in time signal copies are produced by using a set of delays or a variable delay, the step of combining signal copies comprises determining the bit errors against the delay and determining the delay corresponding to a copy with minimal bit error; wherein the step of sampling data is performed at a time corresponding to the delay determined thereby.

**15.** A method according to any one of claims 11 to 14, wherein, further, the BER function is determined against the ratio of bit interval to RMS channel noise to define the number of samplers per bit.

**16.** A communication system comprising a receiver or a plurality of receivers according to any one of claims 1 to 10.

## Patentansprüche

**1.** Ein Empfänger für Hochgeschwindigkeitsdatenzusammenschaltung, umfassend

- ein Abtastsystem zum Empfang eines Digitalsignals, welches eine Vielzahl von Abtastern (67, 69) umfasst, um eine Serie von Signalkopien des empfangenen Signals vorzusehen,
- ein Taktgenerator zur Erzeugung von Takten zum zeitlichen Spreizen der Abtastungen, so das jedes Bitintervall durch mehrere Abtastungen abgedeckt ist,

- ein Übergangsdetektor um den Zeitpunkt zu detektieren, zu dem das Eingangssignal die Ansprechschwelle durchläuft;

- eine Steuereinrichtung (69) zum Steuern der Abtastungen, wobei die Steuereinrichtung das Auge des Augendiagramms des empfangenen Signals aufspürt, wobei sie die Daten nutzt, welche sie vom Übergangsdetektor erhalten hat;

**dadurch gekennzeichnet, dass** der Abtaster, der ein Signal produziert, das die niedrigste Bitfehlerrate (BER) aufweist, ausgewählt wird basierend auf der BER-Verteilung, welche bestimmt ist durch Nutzen der BER-Werte für verschiedene Abtaster, um den Abtaster, der am nächsten zum Minimum in besagter BER-Verteilung liegt, als den Abtaster zu definieren, der zum Datenempfang benutzt wird.

**2.** Ein Empfänger gemäß Anspruch 1, wobei das Abtastsystem wenigstens einen Abtaster umfasst, der an einen Satz von Verzögerungen oder an eine variable Verzögerung gekoppelt ist, um eine Serie von zeitlich mit Zwischenraum angeordneten Signalkopien vorzusehen.

**3.** Ein Empfänger gemäß Anspruch 1, wobei das Abtastsystem eine Vielzahl von Abtastern und einen mehrphasigen Taktgenerator zum Erzeugen mehrfacher Taktphasen umfasst, um eine Serie von zeitlich mit Zwischenraum angeordneten Signalkopien vorzusehen.

**4.** Ein Empfänger gemäß Anspruch 1, wobei das Abtastsystem eine Vielzahl von Abtastern umfasst, welche an einem Satz von Verzögerungen gekoppelt sind, um eine Vielzahl von zeitlich mit Zwischenraum angeordneten Signalkopien vorzusehen.

**5.** Ein Empfänger gemäß einem der Ansprüche 1 bis 4, weiterhin umfassend ein Logiknetzwerk, das die Werte der Bitfehler bezüglich jeder Signalkopie vergleicht, um die Signalkopie mit der geringsten Bitfehlerrate auszuwählen.

**6.** Ein Empfänger gemäß einem der Ansprüche 1 bis 5, wobei die Signalkopien zeitlich gleichförmig mit Zwischenraum angeordnet sind.

**7.** Ein Empfänger gemäß einem der Ansprüche 1 bis 6, wobei die BER-Funktion in Abhängigkeit vom RMS-Kanalrauschen bestimmt ist.

**8.** Ein Empfänger gemäß einem der Ansprüche 1 bis 7, wobei die kontinuierliche BER-Verteilung über mehrfache Taktzyklen in einer Datenstromfolge definiert ist.

**9.** Ein Empfänger gemäß Anspruch 5, weiterhin umfassend ein Mittel zum Bestimmen der Bitfehler in Abhängigkeit der Verzögerung, ein Mittel zum Bestimmen der Verzögerung entsprechend einer Kopie mit minimalen Bitfehler; und ein Mittel zum Zuführen der hierbei bestimmten Verzögerung zu anderen Abtastern.

**10.** Ein Empfänger gemäß einem der Ansprüche 1 bis 9, wobei die BER-Funktion in Abhängigkeit vom Verhältnis von Bitintervall zu RMS-Kanalrauschen festgelegt ist, um die geforderte Anzahl von Abtastern festzulegen, welche vom Betrag des Kanalrauschens abhängt.

**11.** Ein Verfahren einer Hochgeschwindigkeitsdatenzusammenschaltung, umfassend:

- Vorsehen wenigstens eines Abtasters (64, 65) um Daten abzutasten, gekoppelt mit einem Satz von Verzögerungen oder einer variablen Verzögerung (61, 62);

- Erzeugen von Takten, um den oder die Abtaster zu vorbestimmten Zeitintervallen zu takten, um eine Serie von zeitlich mit Zwischenraum angeordneten Signalkopien vorzusehen, die wenigstens ein Bitintervall abdekken;

- Aufspüren des Auges des Augendiagramms des abgetasteten Signals;

**dadurch gekennzeichnet, dass** das Verfahren weiterhin umfasst
Auswählen des Abtasters, der das Signal produziert, das die niedrigste Bitfehlerrate (BER) aufweist, basierend auf der BER-Verteilung, die dadurch festgelegt ist, dass BER-Werte für verschiedene Abtaster genutzt werden,

um den Abtaster zu definieren, der am nächsten zum Minimum der besagten BER-Verteilung liegt.

**12.** Ein Verfahren gemäß Anspruch 11, wobei eine Vielzahl von Abtastern durch Mehrfach-Taktphasen getaktet ist, welche durch einen Mehrphasentakt erzeugt sind.

**13.** Ein Verfahren gemäß Anspruch 11 oder 12, wobei die Daten erst abgetastet werden und dann, nachfolgend, die beste Zeit, um diese Daten abgetastet zu haben, als der Punkt festgelegt wird, an dem die BER-Funktion ihr Minimum aufweist.

**14.** Ein Verfahren gemäß Anspruch 11, wobei die zeitlich mit Zwischenraum angeordneten Signalkopien durch Verwenden eines Satzes von Verzögerungen oder einer variablen Verzögerung produziert werden, wobei der Schritt der Kombination von Signalkopien das Bestimmen der Bitfehler in Abhängigkeit von den Verzögerungen und das Bestimmen der Verzögerung entsprechend einer Kopie mit minimalem Bitfehler umfasst; und wobei der Schritt des Abtastens von Daten zu einer Zeit vollzogen wird, welche zu der hierbei festgelegten Verzögerung korrespondiert.

**15.** Ein Verfahren gemäß einem der Ansprüche 11 bis 14, wobei weiterhin die BER-Funktion in Abhängigkeit vom Verhältnis von Bitintervall zu RMS-Kanalrauschen festgelegt ist, um die Anzahl der Abtaster pro Bit zu definieren.

**16.** Ein Kommunikationssystem, welches einen Empfänger oder eine Vielzahl von Empfängern gemäß einem der Ansprüche 1 bis 10 umfasst.

## Revendications

**1.** Récepteur pour l'interconnexion de données à grande vitesse, comprenant :

- un système d'échantillonnage pour recevoir un signal numérique, comprenant une pluralité d'échantillonneurs, pour produire une série de copies du signal reçu,
- un générateur de signaux d'horloge pour produire des signaux d'horloge pour étaler les échantillons dans le temps de telle sorte que chaque intervalle de bits est couvert par plusieurs échantillons,
- un détecteur de transition pour détecter l'instant où le signal d'entrée franchit le seuil;
- un contrôleur pour commander les échantillonneurs, le contrôleur suivant l'oeil du diagramme en oeil du signal reçu en utilisant des données obtenues au moyen d'un détecteur de transition;

**caractérisé en ce que** l'échantillonneur produisant un signal possédant le taux BER le plus faible d'erreurs sur les bits est sélectionné sur la base de la distribution du BER déterminée en utilisant des valeurs du BER pour différents échantillonneurs, de manière à définir l'échantillonneur qui est le plus proche du minimum dans ladite distribution du BER en tant qu'échantillonneur utilisé pour la réception de données.

**2.** Récepteur selon la revendication 1, dans lequel le système d'échantillonnage comprend au moins un échantillonneur couplé à un ensemble de retards ou à un retard variable pour produire une série de copies de signaux espacées dans le temps.

**3.** Récepteur selon la revendication 1, dans lequel le système d'échantillonnage comprend une pluralité d'échantillonneurs et un générateur de signaux d'horloge à phases multiples servant à produire des phases multiples de signaux d'horloge pour produire une série de copies de signaux espacées dans le temps.

**4.** Récepteur selon la revendication 1, dans lequel le système d'échantillonnage comprend une pluralité d'échantillonneurs couplés à un ensemble de retards, pour produire une pluralité de copies de signaux espacées dans le temps.

**5.** Récepteur selon l'une quelconque des revendications 1 à 4, comprenant en outre un réseau logique qui compare les valeurs d'erreurs sur les bits par rapport à chaque copie de signal pour sélectionner la copie de signal avec le taux minimum d'erreurs sur les bits.

**6.** Récepteur selon l'une quelconque des revendications 1 à 5, dans lequel les copies des signaux sont espacées d'une manière uniforme dans le temps.

**7.** Récepteur selon l'une quelconque des revendications 1 à 6, dans lequel la fonction du BER est déterminée par rapport à un bruit de canal RMS.

**8.** Récepteur selon l'une quelconque des revendications 1 à 7, dans lequel la distribution BER continue est définie pendant de multiples cycles d'horloge dans un flux de données en série.

**9.** Récepteur selon la revendication 5, comprenant en outre des moyens pour déterminer si les erreurs sur les bits par rapport au retard, des moyens pour déterminer le retard correspondant à une copie présentant une erreur minimale sur les bits; et des moyens pour appliquer le retard déterminé de ce fait à d'autres échantillonneurs.

**10.** Récepteur selon l'une quelconque des revendications 1 à 9, dans lequel la fonction du BER est déterminée par rapport au rapport de l'intervalle de bits au bruit de canal RMS pour déterminer le nombre requis d'échantillonneurs en fonction de la quantité du bruit de canal.

**11.** Procédé d'interconnexion de données à grande vitesse, consistant à :

- prévoir au moins un échantillonneur pour échantillonner des données, couplé à un ensemble de retards ou à un retard variable;
- produire les signaux d'horloge pour commander de façon cadencée l'échantillonneur ou les échantillonneurs à des intervalles de temps prédéterminés pour produire une série de copies de signaux espacés dans le temps, courant au moins un intervalle d'un bit,
- réaliser le suivi de l'oeil du diagramme en oeil du signal échantillonné;

**caractérisé en ce que** le procédé comprend en outre
la sélection de l'échantillonneur produisant le signal possédant le taux minimum d'erreurs sur les bits sur la base de la distribution du BER déterminée en utilisant des valeurs du BER pour des échantillonneurs différents, de manière à définir l'échantillonneur qui est le plus proche du minimum dans ladite distribution du BER.

**12.** Procédé selon la revendication 11, selon lequel une pluralité d'échantillonneurs sont commandés de façon cadencée par des phases multiples de signaux d'horloge, produites par un signal d'horloge à phases multiples.

**13.** Procédé selon la revendication 11 ou 12, selon lequel les données sont d'abord échantillonnées puis le meilleur temps pour avoir ces données échantillonnées est ensuite déterminé en tant que point où la fonction BER possède son minimum.

**14.** Procédé selon la revendication 11, dans lequel les copies de signaux espacés dans le temps sont produites en utilisant un ensemble de retards ou un retard variable, l'étape de combinaison de copies de signaux comprend la détermination des erreurs sur les bits par rapport au retard et la détermination du retard correspondant à une copie avec une erreur minimale sur les bits, l'étape d'échantillonnage de données étant exécutée à un instant correspondant au retard déterminé de ce fait.

**15.** Procédé selon l'une quelconque des revendications 11 à 14, dans lequel en outre la fonction BER est déterminée par rapport au rapport de l'intervalle de bits au bruit de canal RMS pour définir le nombre d'échantillonneurs par bit.

**16.** Canal de communication utilisant un récepteur ou une pluralité de récepteurs selon l'une quelconque des revendications 1 à 10.

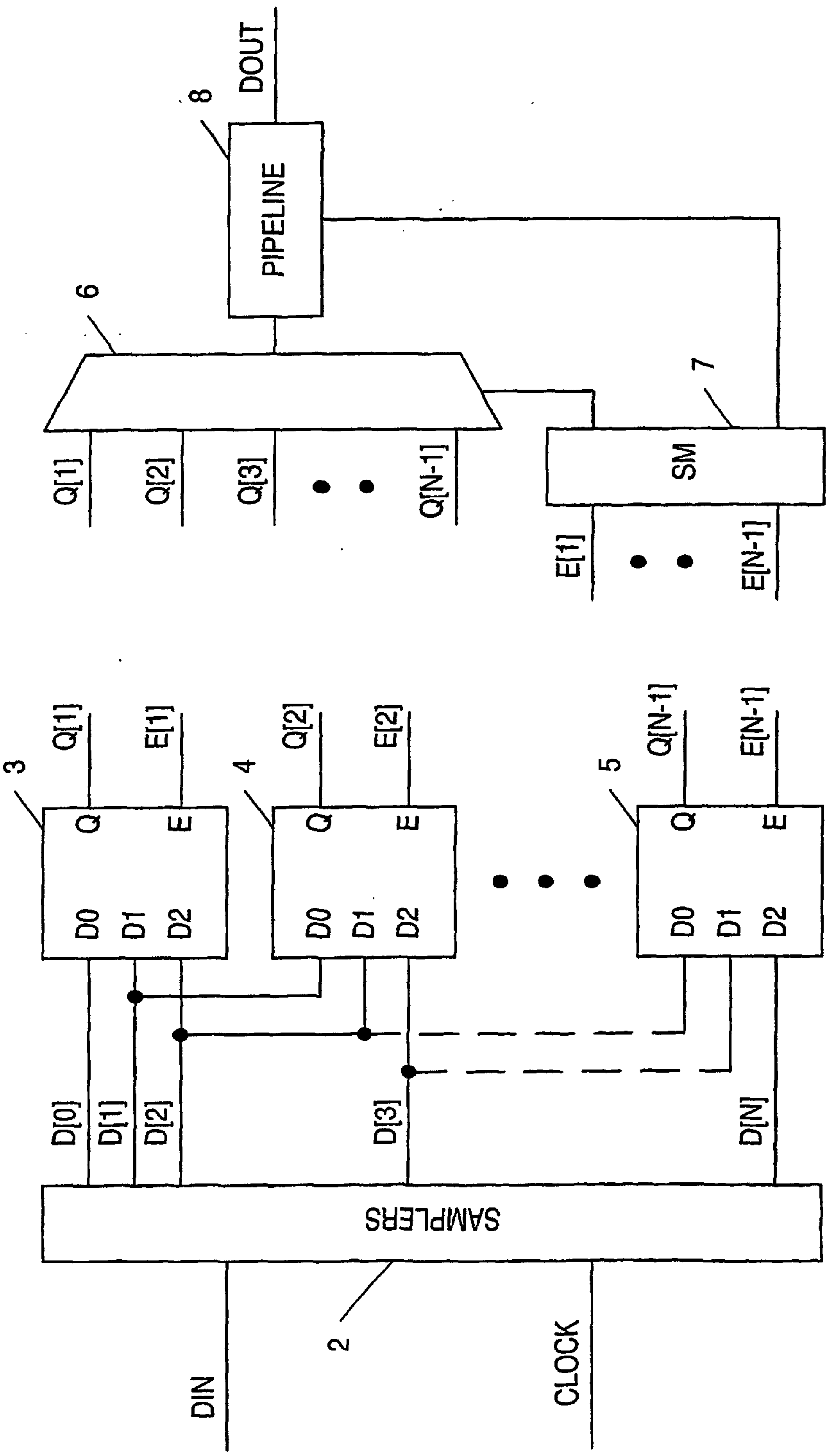
DOUT
8
PIPELINE
6
7
SM
Q[1]
Q[2]
Q[3]
Q[N-1]
E[1]
E[N-1]
3
4
5
Q
E
D0
D1
D2
Q[1]
E[1]
Q[2]
E[2]
Q[N-1]
E[N-1]
D[0]
D[1]
D[2]
D[3]
D[N]
SAMPLERS
2
DIN
CLOCK

Fig.1

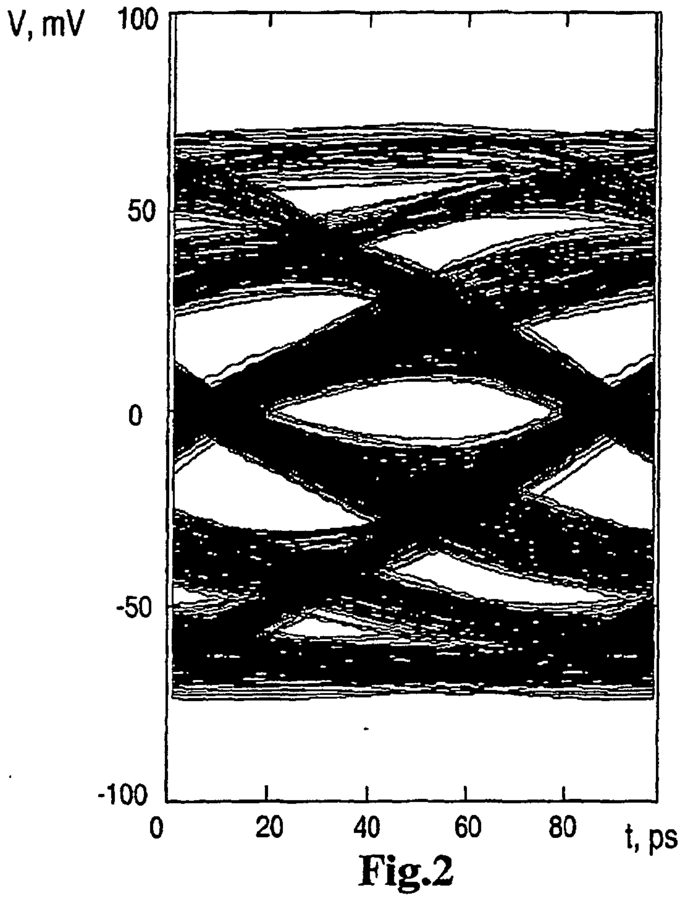
V, mV
100
50
0
-50
-100
0
20
40
60
80
t, ps

Fig.2

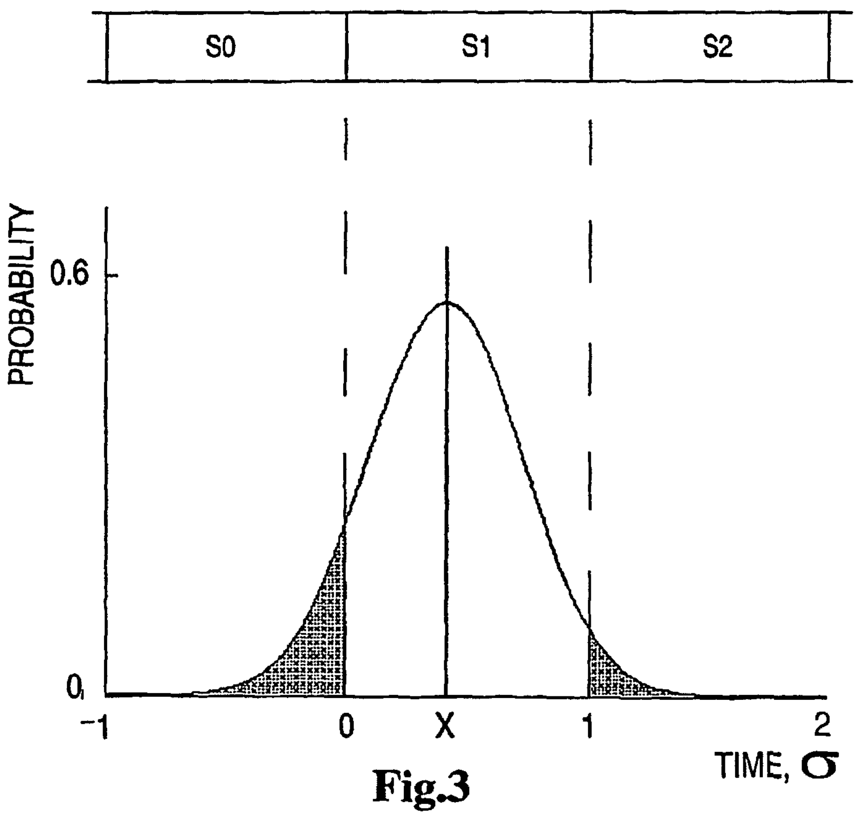
S0
S1
S2
PROBABILITY
0.6
0
−1
0
X
1
2
TIME, σ

Fig.3

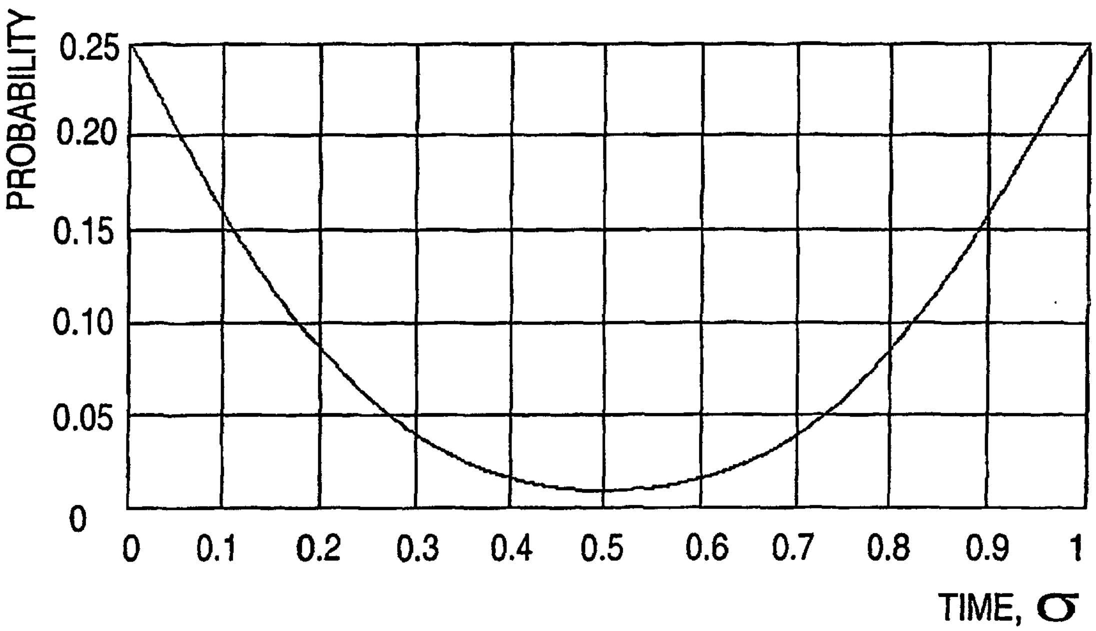
PROBABILITY
0.25
0.20
0.15
0.10
0.05
0
0
0.1
0.2
0.3
0.4
0.5
0.6
0.7
0.8
0.9
1
TIME, σ

**Fig.4**

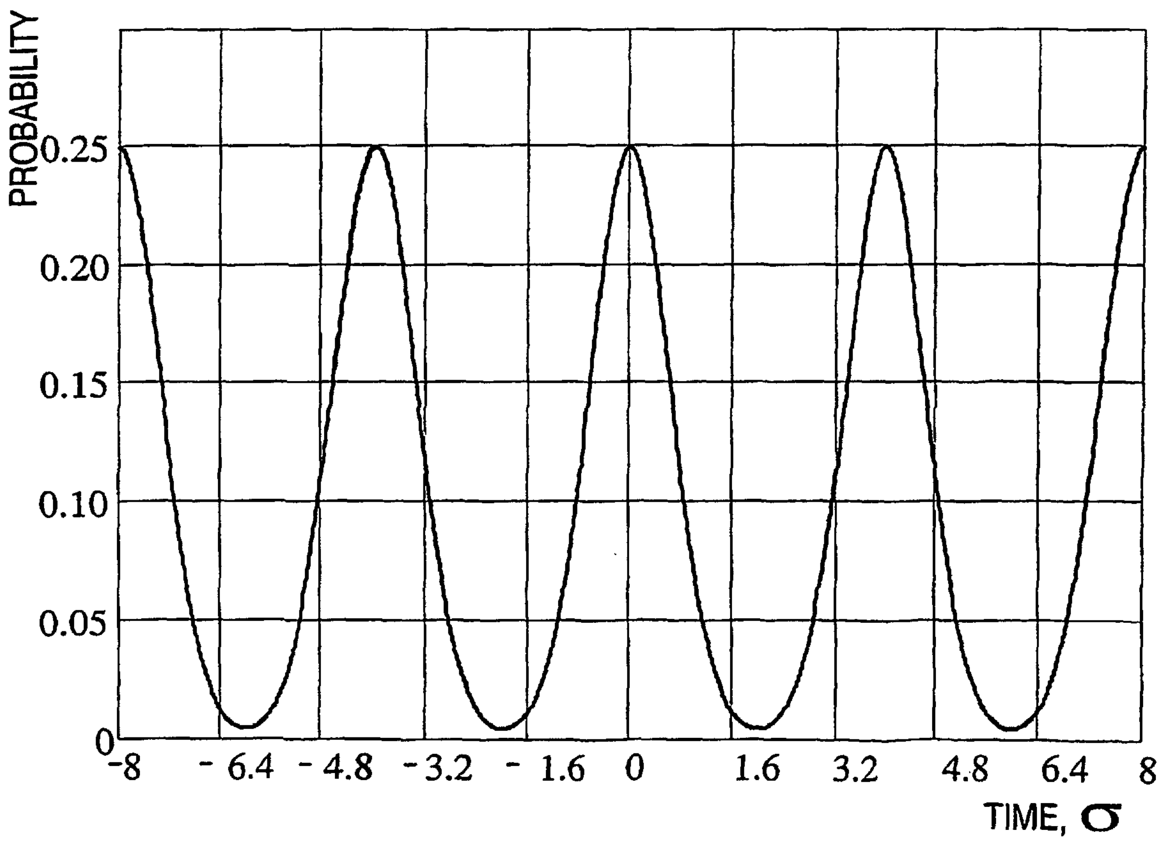
PROBABILITY
0.25
0.20
0.15
0.10
0.05
0
-8
- 6.4
- 4.8
-3.2
- 1.6
0
1.6
3.2
4.8
6.4
8
TIME, σ

**Fig.5**

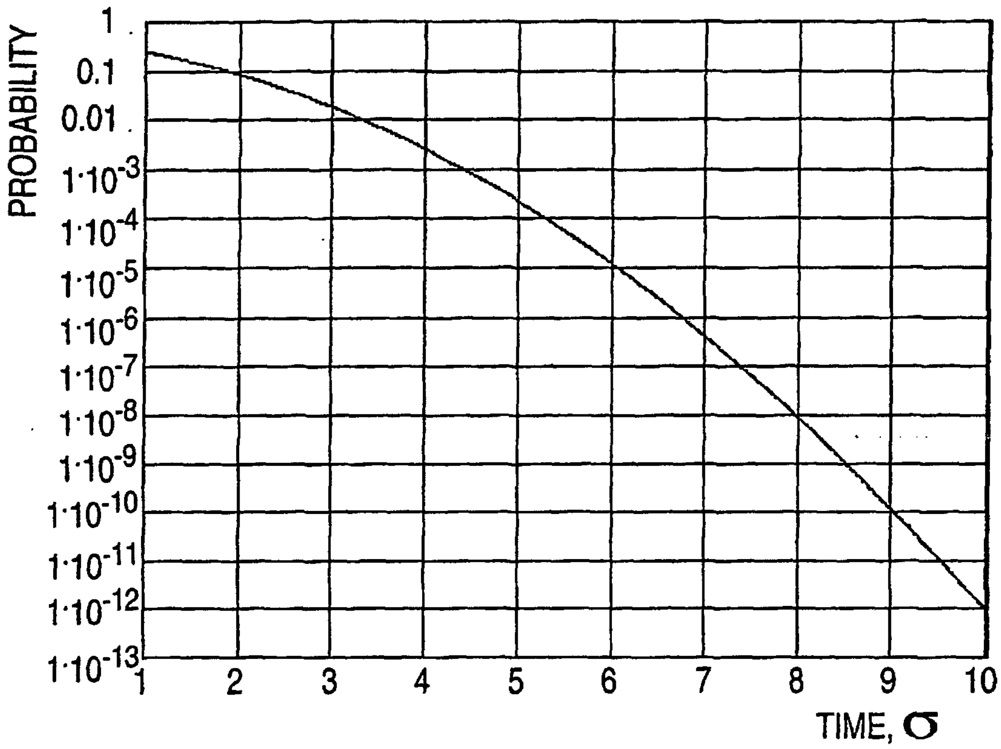
PROBABILITY
1
0.1
0.01
$1 \cdot 10^{-3}$
$1 \cdot 10^{-4}$
$1 \cdot 10^{-5}$
$1 \cdot 10^{-6}$
$1 \cdot 10^{-7}$
$1 \cdot 10^{-8}$
$1 \cdot 10^{-9}$
$1 \cdot 10^{-10}$
$1 \cdot 10^{-11}$
$1 \cdot 10^{-12}$
$1 \cdot 10^{-13}$
1 2 3 4 5 6 7 8 9 10
TIME, σ

**Fig.6**

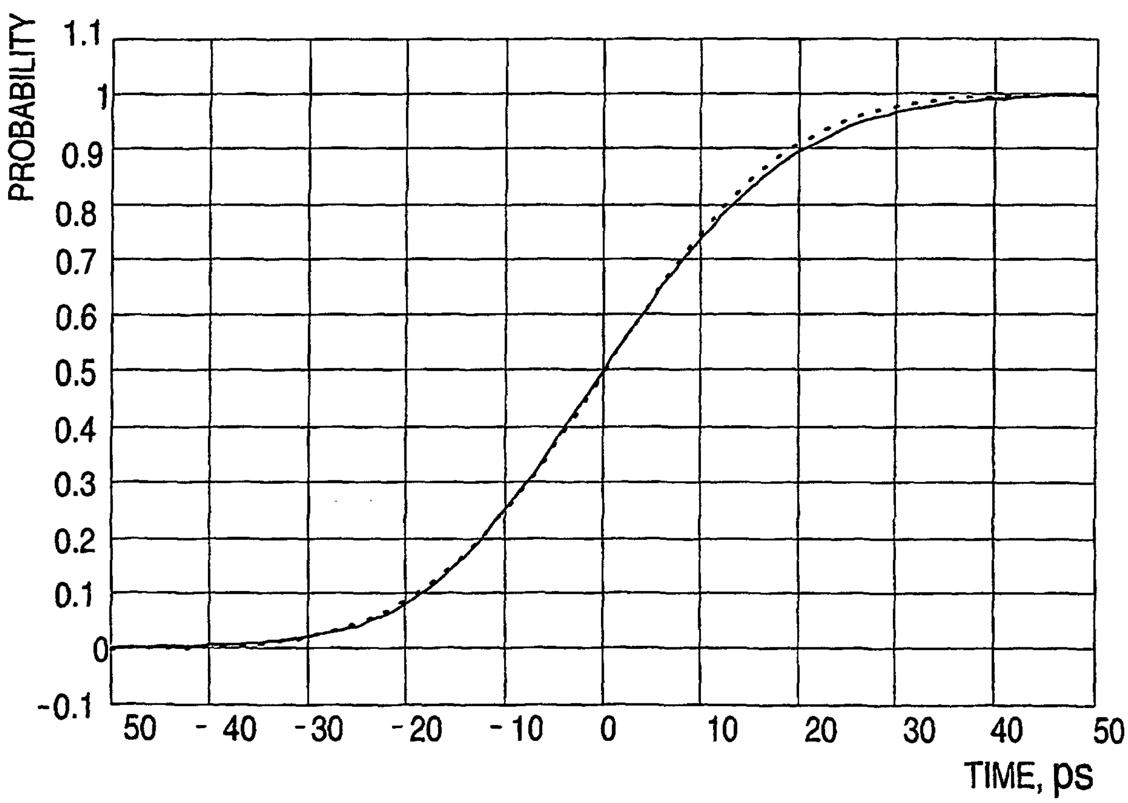
PROBABILITY
1.1
1
0.9
0.8
0.7
0.6
0.5
0.4
0.3
0.2
0.1
0
-0.1
50 - 40 -30 -20 -10 0 10 20 30 40 50
TIME, ps

**Fig.7**

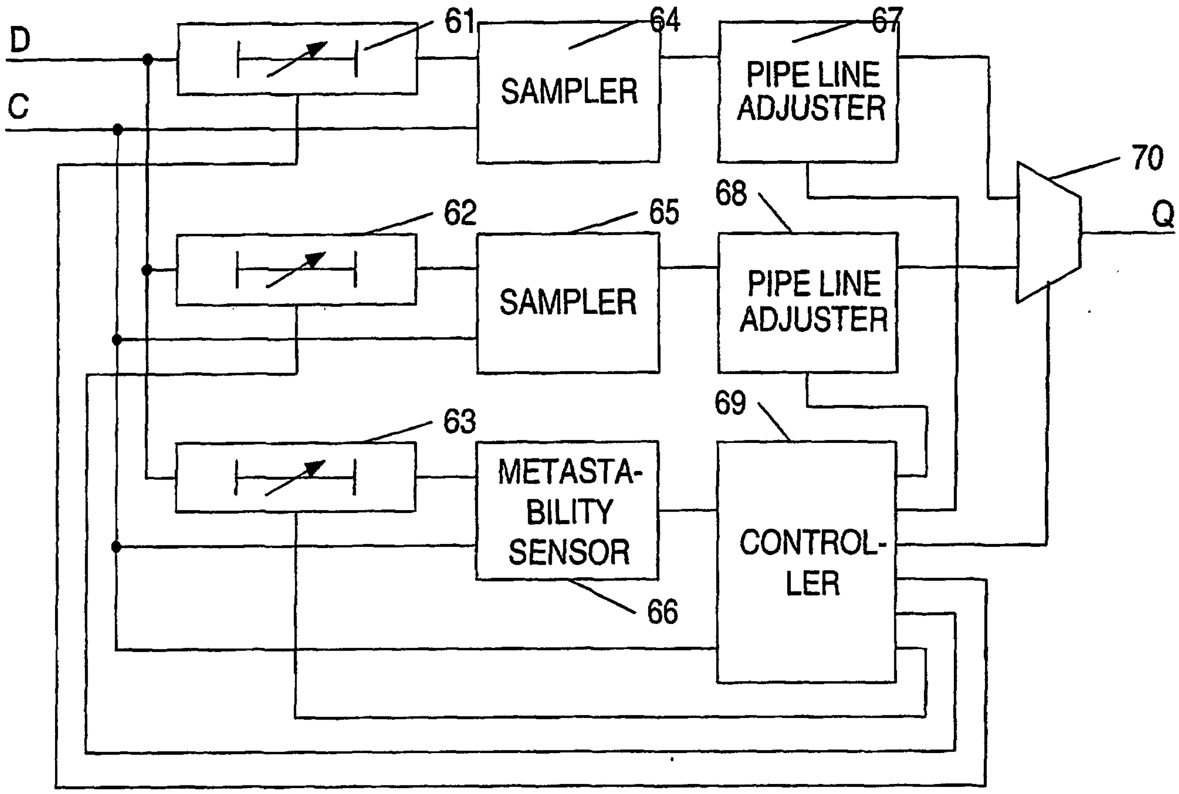
D
C
61
64
67
SAMPLER
PIPE LINE ADJUSTER
70
Q
62
65
68
SAMPLER
PIPE LINE ADJUSTER
63
69
METASTA-BILITY SENSOR
CONTROL-LER
66

Fig.8

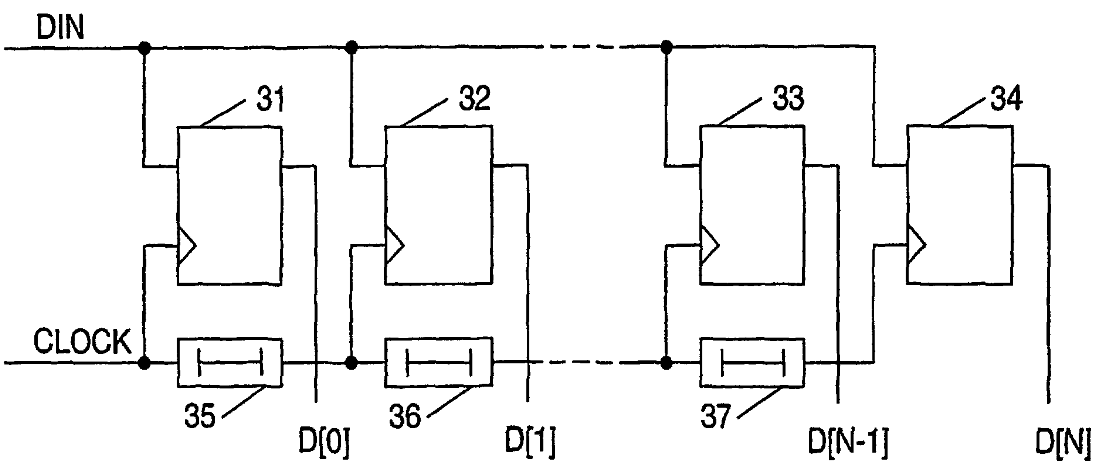
DIN
31
32
33
34
CLOCK
35
36
37
D[0]
D[1]
D[N-1]
D[N]

Fig.9

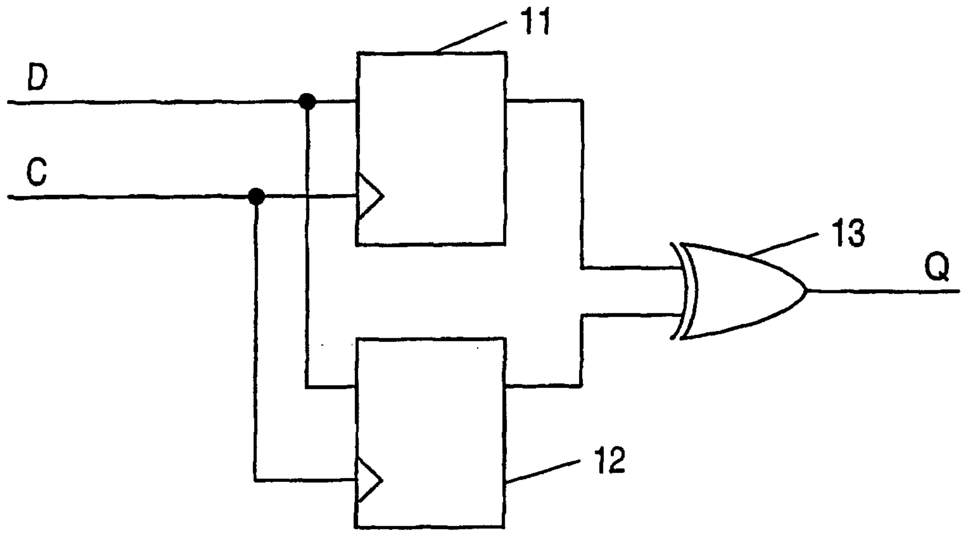


Fig.10

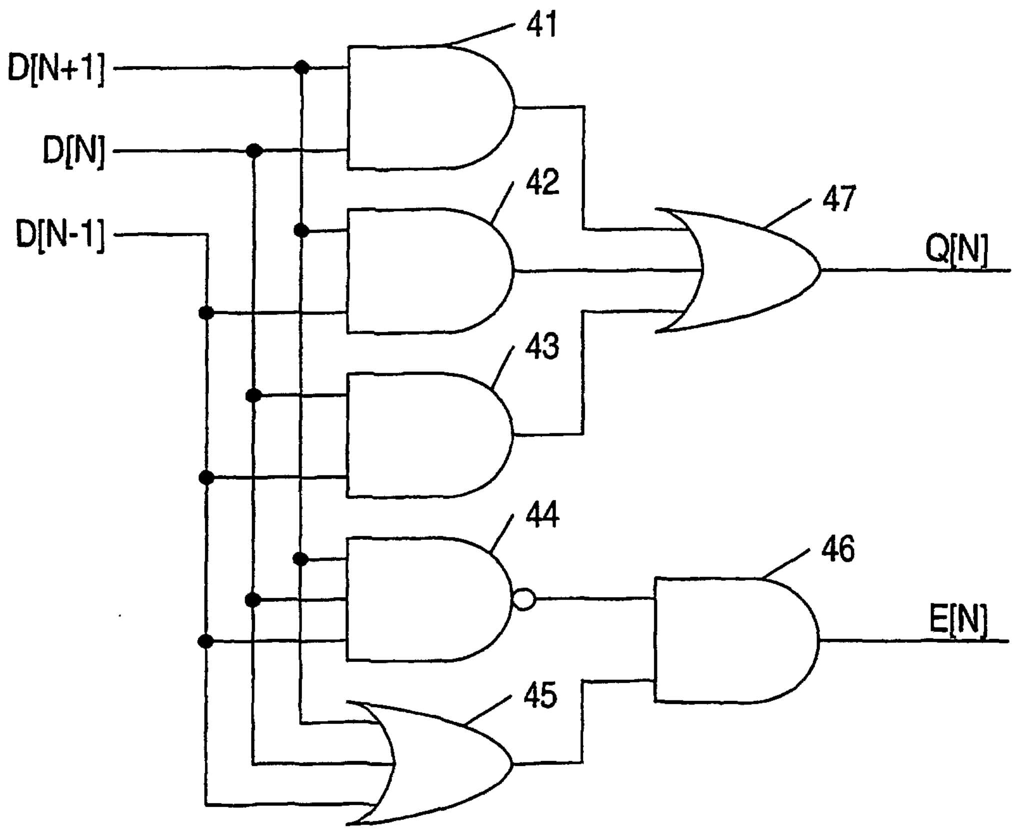


Fig.11

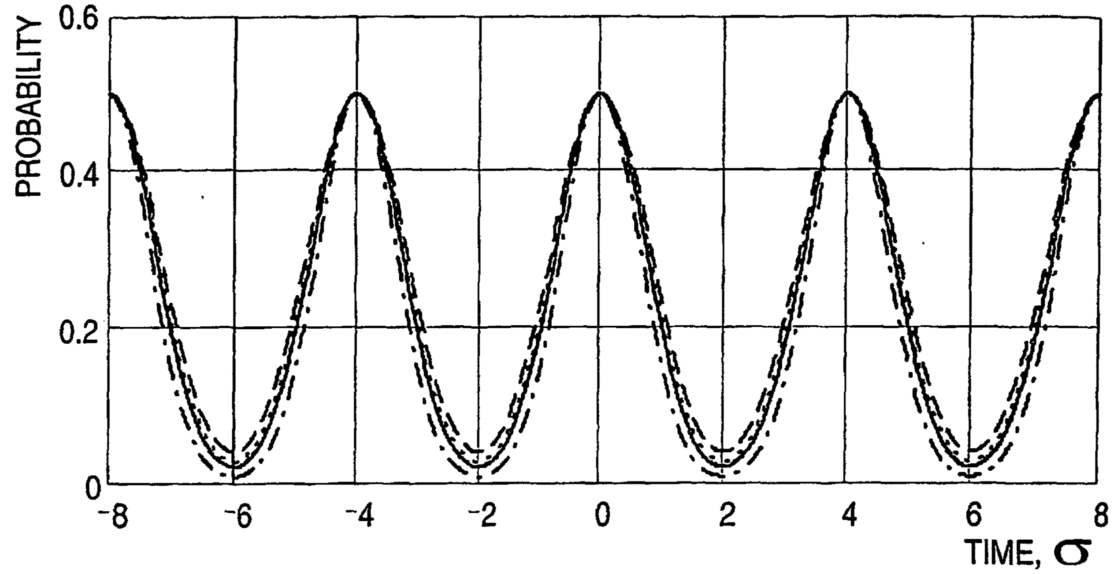

PROBABILITY
0.6
0.4
0.2
0
-8
-6
-4
-2
0
2
4
6
8
TIME, σ


Fig.12

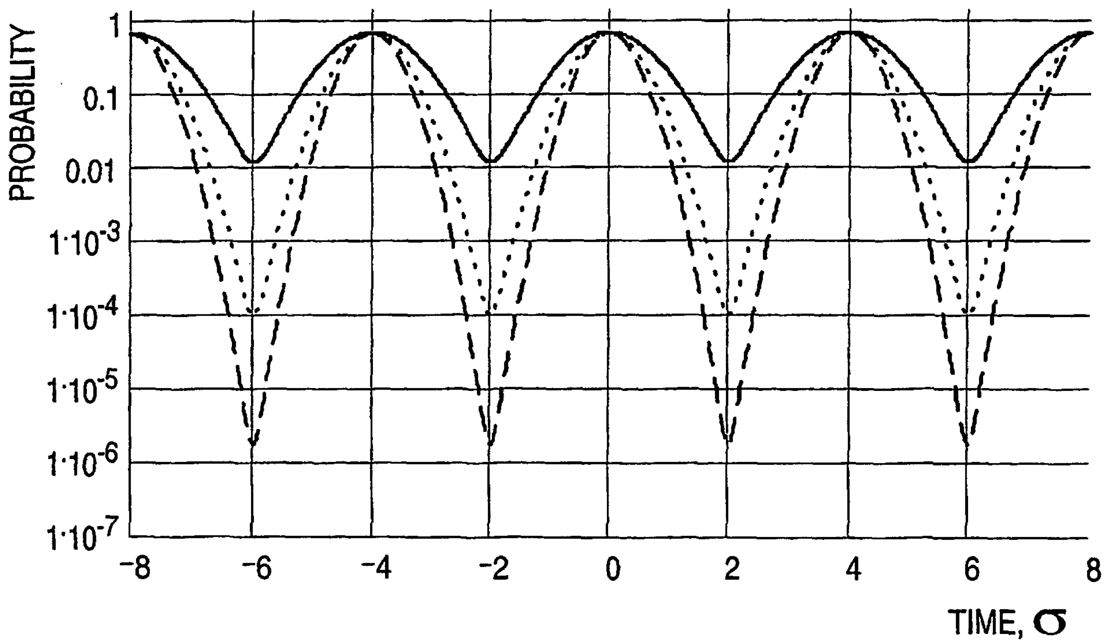

PROBABILITY
1
0.1
0.01
1·10-3
1·10-4
1·10-5
1·10-6
1·10-7
-8
-6
-4
-2
0
2
4
6
8
TIME, σ


Fig.13

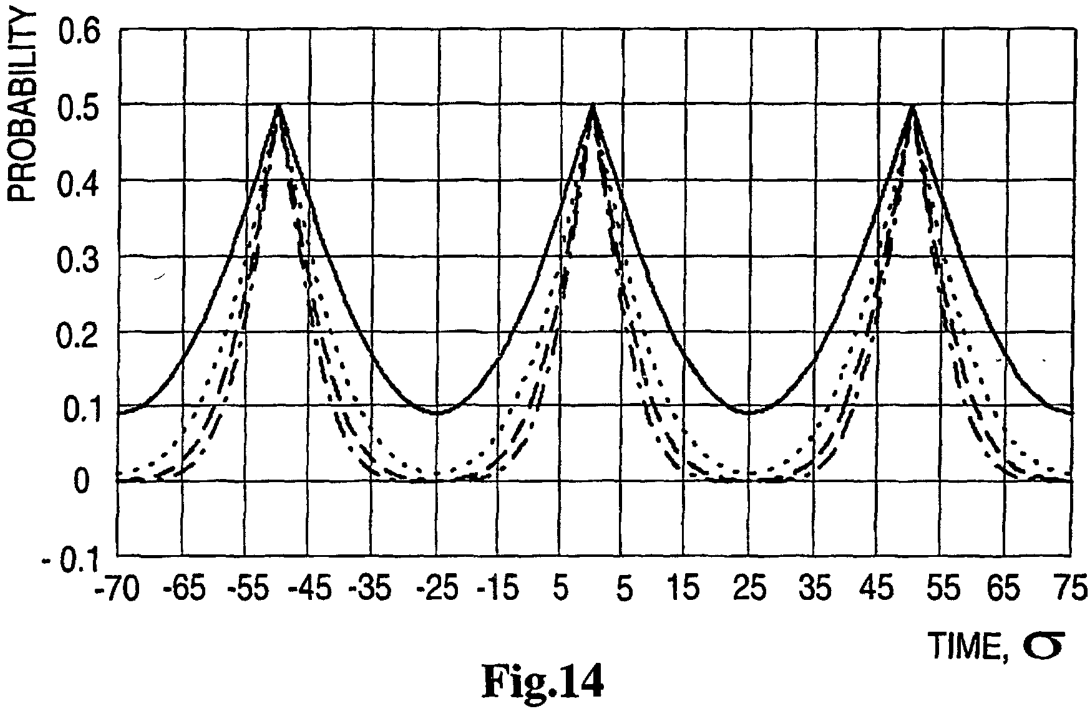
PROBABILITY
0.6
0.5
0.4
0.3
0.2
0.1
0
- 0.1
-70 -65 -55 -45 -35 -25 -15 5 5 15 25 35 45 55 65 75
TIME, σ

Fig.14

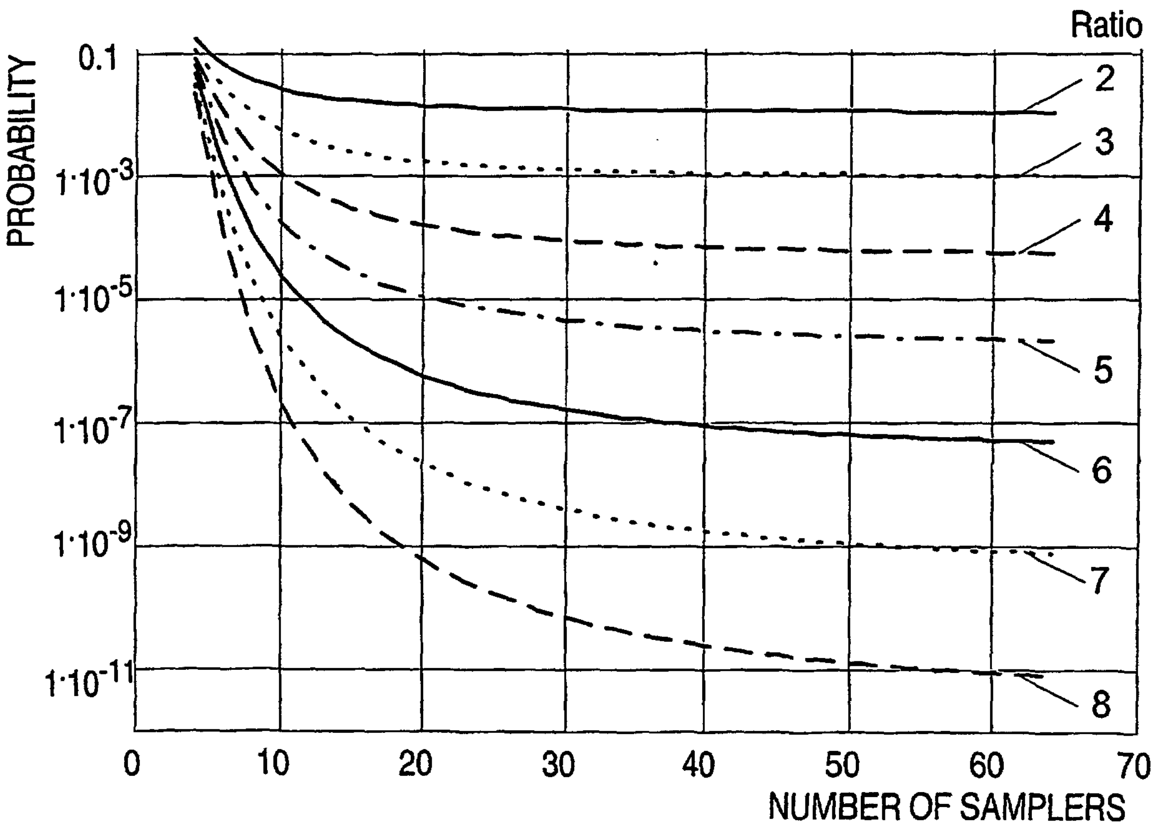
PROBABILITY
0.1
1·10-3
1·10-5
1·10-7
1·10-9
1·10-11
Ratio
2
3
4
5
6
7
8
0 10 20 30 40 50 60 70
NUMBER OF SAMPLERS

Fig.15

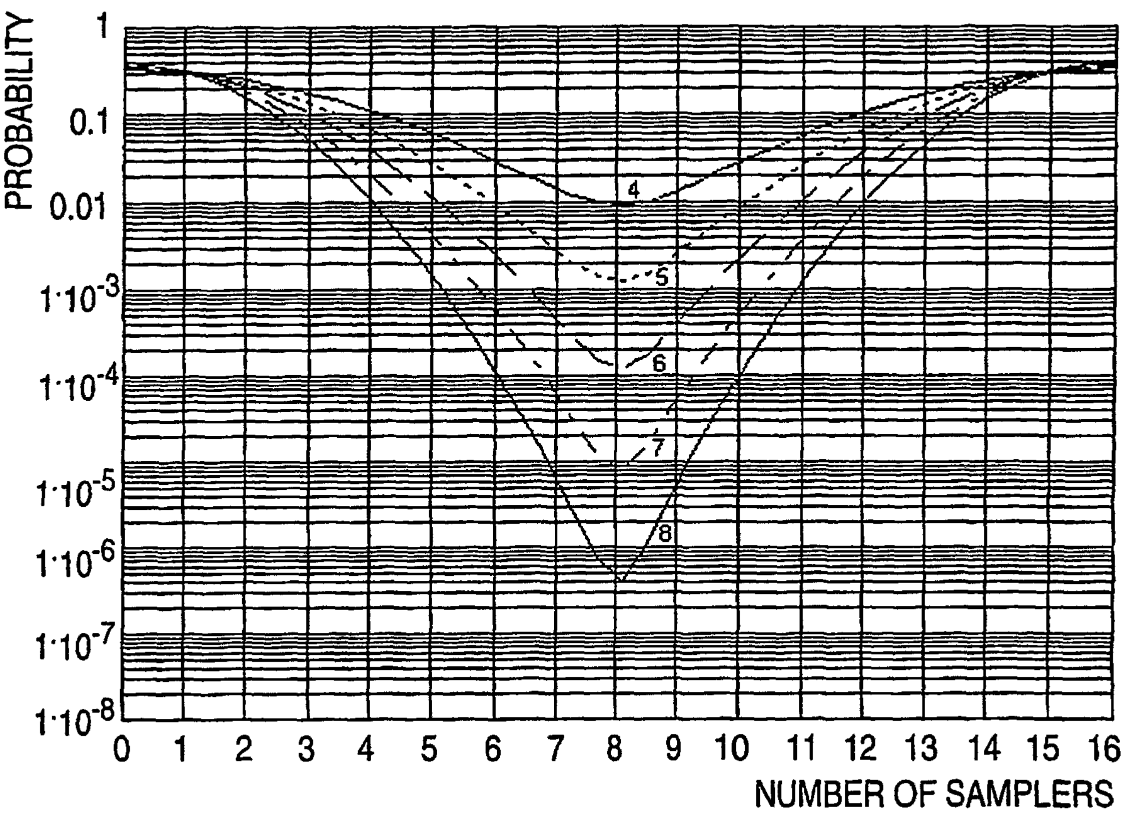
PROBABILITY
1
0.1
0.01
1·10-3
1·10-4
1·10-5
1·10-6
1·10-7
1·10-8
0
1
2
3
4
5
6
7
8
9
10
11
12
13
14
15
16
NUMBER OF SAMPLERS
4
5
6
7
8

**Fig.16**

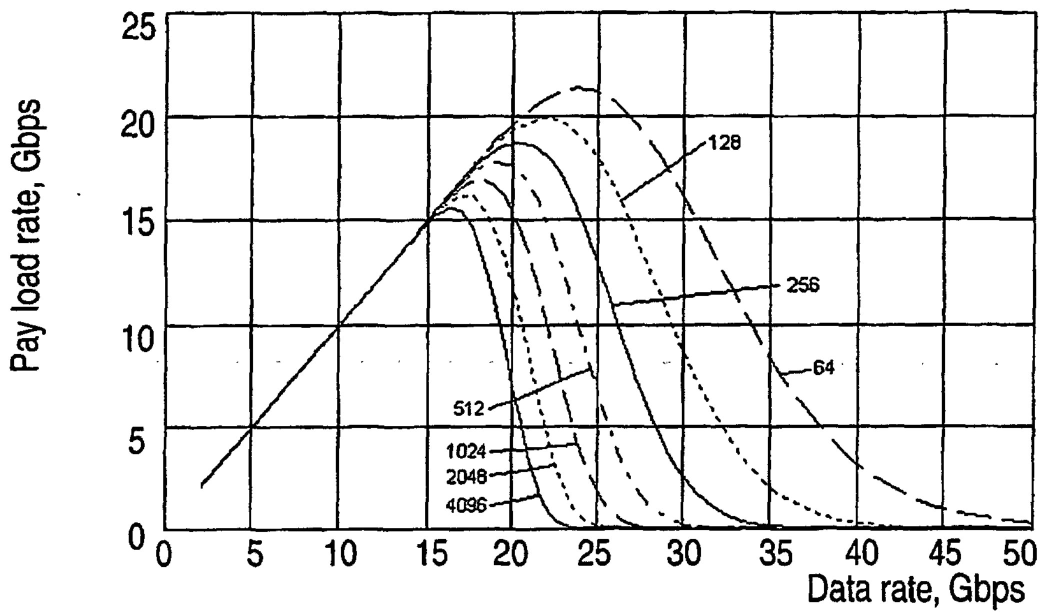
Pay load rate, Gbps
25
20
15
10
5
0
0
5
10
15
20
25
30
35
40
45
50
Data rate, Gbps
128
256
64
512
1024
2048
4096

**Fig.17**

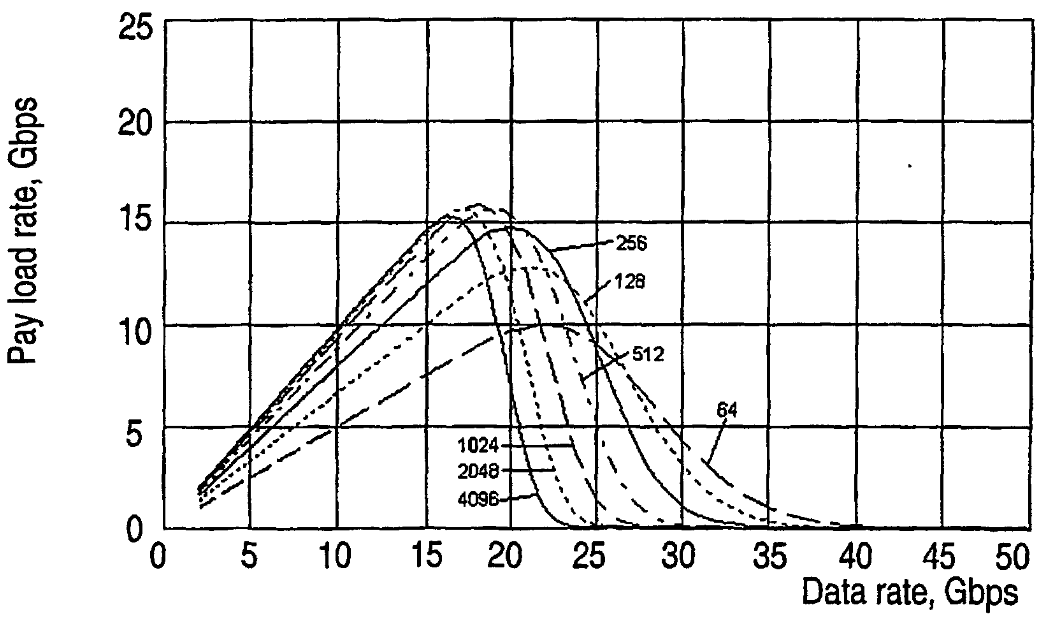
Pay load rate, Gbps
25
20
15
10
5
0
0
5
10
15
20
25
30
35
40
45
50
Data rate, Gbps
256
128
512
64
1024
2048
4096

**Fig.18**